# EUROPÄISCHE PATENTSCHRIFT

(11) **EP 3 191 619 B1**
(45) Veröffentlichungstag und Bekanntmachung des Hinweises auf die Patenterteilung: **15.05.2019**
(21) Anmeldenummer: 15756399.0
(22) Anmeldetag: 28.08.2015
(51) Int. Cl.: C25B 1/46, C25B 11/03, C25B 11/04, H01M 8/0234, H01M 8/0239, H01M 8/0243

(54) **KOHLENSTOFFNANORÖHRCHEN ENTHALTENDE SAUERSTOFFVERZEHRELEKTRODE UND VERFAHREN ZU IHRER HERSTELLUNG**
OXYGEN-CONSUMING ELECTRODE WHICH CONTAINS CARBON NANOTUBES AND METHOD FOR PRODUCING SAME
ÉLECTRODE CONSOMMANT DE L'OXYGÈNE, CONTENANT DES NANOTUBES DE CARBONE, ET SON PROCÉDÉ DE FABRICATION

(30) Priorität: 12.09.2014 DE 102014218368
(43) Veröffentlichungstag der Anmeldung: 19.07.2017
(73) Patentinhaber: Covestro Deutschland AG, 51373 Leverkusen (DE)
(72) Erfinder: BULAN, Andreas, 40764 Langenfeld (DE); KINTRUP, Jürgen, 51373 Leverkusen (DE)
(74) Vertreter: Levpat
(86) Internationale Anmeldenummer: PCT/EP2015/069726
(87) Internationale Veröffentlichungsnummer: WO 2016/037867

(56) Entgegenhaltungen:
- EP-A2- 1 728 896
- GB-A- 2 487 836
- YOU-QUN CHU ET AL: "Electrocatalytic Reduction of Oxygen on Carbon Nanotubes Electrode", ACTA PHYS. CHIM. SIN., Bd. 20, Nr. 03, 15. März 2004 (2004-03-15) , Seiten 331-335, XP055224221, DOI: 10.3866/PKU.WHXB20040324

## Beschreibung

Die Erfindung betrifft eine Sauerstoffverzehrelektrode, insbesondere für den Einsatz in der Chloralkali-Elektrolyse, mit einer neuartigen Elektrokatalysatorbeschichtung sowie eine Elektrolysevorrichtung. Die Erfindung betrifft ferner ein Herstellungsverfahren für die Sauerstoffverzehrelektrode sowie ihre Verwendung in der Chloralkali-Elektrolyse oder Brennstoffzellentechnik.

Die Erfindung geht aus von an sich bekannten Sauerstoffverzehrelektroden, die als Gasdiffusionselektroden ausgebildet sind und üblicherweise einen elektrisch leitenden Träger und eine Gasdiffusionsschicht mit einer katalytisch aktiven Komponente umfassen.

Sauerstoffverzehrelektroden stellen eine Form von Gasdiffusionselektroden dar. Gasdiffusionselektroden sind Elektroden, in denen die drei Aggregatzustände - fest, flüssig und gasförmig - miteinander in Kontakt stehen und der feste, Elektronen leitende Katalysator eine elektrochemische Reaktion zwischen der flüssigen und der gasförmigen Phase katalysiert. Der feste Elektrokatalysator ist dabei üblicherweise in einer porösen Folie mit einer Dicke in der Größenordnung von etwa 200 µm bis 500 µm enthalten.

Verschiedene Vorschläge zum Betrieb der Sauerstoffverzehrelektroden in Elektrolysezellen in technischer Größe sind aus dem Stand der Technik grundsätzlich bekannt. Die Grundidee dabei ist, die Wasserstoff entwickelnde Kathode der Elektrolyse (beispielsweise in der Chloralkali-Elektrolyse) durch die Sauerstoffverzehrelektrode (Kathode) zu ersetzen. Eine Übersicht über die möglichen Zelldesigns und Lösungen kann der Veröffentlichung von Moussallem et al "Chlor-Alkali Electrolysis with Oxygen Depolarized Cathodes: History, Present Status and Future Prospects", J. Appl. Electrochem. 38 (2008) 1177-1194, entnommen werden.

Die Sauerstoffverzehrelektrode - im Folgenden auch kurz SVE genannt - muss eine Reihe von grundsätzlichen Anforderungen erfüllen, um in technischen Elektrolyseuren einsetzbar zu sein. So muss der Elektrokatalysator und alle anderen verwendeten Materialien chemisch stabil sein gegen die eingesetzte Alkalilauge, wie z.B. eine Natronlauge von ca. 32 Gew.-%, und gegenüber reinem Sauerstoff bei einer Temperatur von typischerweise 80 - 90°C. Ebenso wird ein hohes Maß an mechanischer Stabilität gefordert, dass die Elektroden in Elektrolyseuren einer Größe von üblicherweise mehr als 2 m² Fläche (technische Größe) eingebaut und betrieben werden. Weitere Eigenschaften sind: eine hohe elektrische Leitfähigkeit, eine hohe innere Oberfläche und eine hohe elektrochemische Aktivität des Elektrokatalysators. Geeignete hydrophobe und hydrophile Poren und eine entsprechende Porenstruktur zur Leitung von Gas und Elektrolyt sind ebenso notwendig, wie eine Dichtigkeit, so dass z.B. in einem Elektrolyseur Gas- und Flüssigkeitsraum voneinander getrennt bleiben. Die Langzeitstabilität und geringe Herstellkosten sind weitere besondere Anforderungen an eine technisch nutzbare Sauerstoffverzehrelektrode.

Eine weitere Entwicklungsrichtung zur Nutzung der SVE-Technologie in der Chlor-Alkali-Elektrolyse ist, die Ionenaustauschermembran, die in der Elektrolysezelle den Anoden- vom Kathodenraum trennt, direkt auf die SVE aufzulegen. Ein Natronlaugespalt ist in dieser Anordnung nicht vorhanden. Diese Anordnung wird auch als zero gap Anordnung im Stand der Technik bezeichnet. Diese Anordnung wird üblicherweise auch in der Brennstoffzellen-Technologie angewandt. Nachteilig hierbei ist, dass die sich bildende Natronlauge durch die SVE zur Gasseite geleitet werden muss und anschließend an der SVE nach unten fließt. Hierbei darf es nicht zu einer Verstopfung der Poren in der SVE durch die Natronlauge oder zu Auskristallisation von Natronlauge in den Poren kommen. Es hat sich herausgestellt, dass hierbei auch sehr hohe Natronlauge-Konzentrationen entstehen können, wobei die Ionenaustauschermembran gegen diese hohen Konzentrationen nicht langzeitstabil ist (Lipp et al, J. Appl. Electrochem. 35 (2005)1015 - Los Alamos National Laboratory "Peroxide formation during chlor-alkali electrolysis with carbonbased ODC").

Auf den Einsatz von preiswerten Kohlenstoffmaterialien wie Ruß oder Graphit als Trägermaterial, muss insbesondere bei der Sauerstoffreduktion im Alkalischen gänzlich verzichtet werden, weil diese allgemein die Reaktion gemäß Reaktionsweg (I) fördern und damit zu stark verminderten Lebenszeiten der Elektroden führen und zu Stromausbeuteverlusten (O. Ichinose et al. "Effect of silver catalyst on the activity and mechanism of a gas diffusion type oxygen cathode for chloralkali electrolysis", Journal of Applied Electrochemistry 34: 55-59 (2004)).

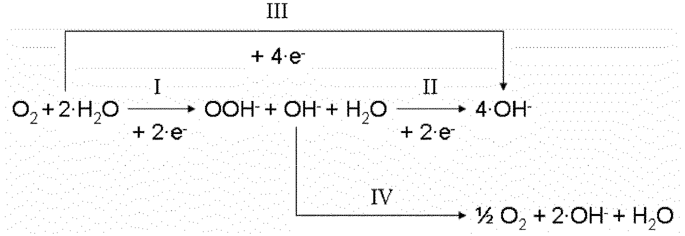

Nachteil bei der Sauerstoffreduktion im Alkalischen, wobei unter "im Alkalischen" z.B. eine konzentrierte, insbesondere 32 Gew.-%ige Natronlauge verstanden wird, mit einem Elektrokatalysator, z.B. ein Katalysator, bei dem Silber auf Ruß geträgert vorliegt und einer Temperatur im Bereich von 60°C bis 90°C ist, dass das intermediär gebildete Wasserstoffperoxid den Kohlenstoff aus dem Ruß abbaut, wodurch es zu Rissbildungen in der Elektrode und zur mechanischen Instabilität der Elektrode und deren Unbrauchbarkeit kommt. Durch diese "Kohlenstoff-Korrosion" wird ebenfalls die Anbindung des geträgerten Elektrokatalysators an den Träger gelöst und der Elektrokatalysator damit unbrauchbar.

Bekannt ist ebenfalls (siehe O. Ichinose et al.), dass die Übertragung von zwei Elektronen auf den Sauerstoff vermieden werden kann, wenn Silber dem Ruß zugesetzt wird; hier ist der vier Elektroden übertragende Schritt der bevorzugte.

Ähnliche Effekte treten auch bei mit Platin beladenen Elektroden, die Ruß enthalten, auf (L. Lipp "Peroxide formation in a zero-gap chlor-alkali cell with an oxygendepolarized cathode", Journal of Applied Electrochemistry 35:1015-1024 (2005)). Es wird weiter offenbart, dass durch Anlegen höherer Spannungen und/oder höherer Stromdichten ein Teil des entstandenen Wasserstoffperoxids weiter zu den gewünschten Hydroxid-Ionen reduziert werden kann. Damit wird also die Möglichkeit der Folge von Reaktionen gemäß Reaktionsweg (I) und (II) beschrieben. Da aber die Reaktion gemäß Reaktionsweg (I) stattfindet, ist die Reaktion gemäß Reaktionsweg IV ebenfalls nicht auszuschließen, was wiederum zu einer Verringerung der Ausbeute an Hydroxid-Ionen führt. Die offenbarten Verfahrensvarianten (siehe L. Lipp et al., O. Ichinose et al.) weisen somit die gleichen wirtschaftlichen und technischen Nachteile auf.

Kohlenstoffnanoröhrchen (CNTs) sind mindestens seit ihrer Beschreibung 1991 von Iijima 5 (S. Iijima, Nature 354, 56-58, 1991) dem Fachmann allgemein bekannt. Unter Kohlenstoffnanoröhrchen werden seither zylinderförmige Körper umfassend Kohlenstoff mit einem Durchmesser zwischen 3 und 80 nm und einer Länge, die ein Vielfaches, mindestens 10-faches, des Durchmessers beträgt, zusammengefasst. Weiterhin kennzeichnend für diese Kohlenstoffnanoröhrchen sind Lagen geordneter Kohlenstoffatome, wobei im Regelfall die Kohlenstoffnanoröhrchen einen in der Morphologie unterschiedlichen Kern aufweisen. Synonyme für Kohlenstoffnanoröhrchen sind beispielsweise "carbon fibrils" oder "hollow carbon fibres" oder "carbon bamboos" oder (im Fall von aufgewickelten Strukturen)"Nanoscrolls" oder "Nanorolls".

Eine Weiterentwicklung von Verfahren zur Reduktion Sauerstoffs ist die Verwendung von Stickstoff enthaltende Kohlenstoffmodifikationen (P. Matter et al., "Oxygen reduction reaction activity and surface properties of nanostructured nitrogen-containing carbon", Journal of Molecular Catalysis A: Chemical 264: 73-81 (2007). Hierbei wird durch katalytische Abscheidung von Dämpfen aus Acetonitril auf Trägermaterialien, wie Silziumdioxid, Magnesiumoxid die wiederum Eisen, Kobalt oder Nickel als katalytisch aktive Komponente enthalten, eine katalytische Aktivität für die Reduktion Sauerstoffs erhalten. Das Verfahren zur Reduktion Sauerstoffs wird dadurch gekennzeichnet, dass es in einer 0,5 molaren Schwefelsäurelösung durchgeführt wird.

Die WO 2010069490 A1 beschreibt den Einsatz von Stickstoff-modifizierten Kohlenstoffnanoröhrchen (NCNTs) zur Sauerstoff-Reduktion im Alkalischen. Hierbei werden keine Edelmetall-haltigen Katalysatoren eingesetzt. Bei Versuchen zeigte sich jedoch, dass die NCNT-basierten Elektroden keine ausreichende Langezeitstabilität aufwiesen.

Die DE102009058833 A1 beschreibt ein Verfahren zur Herstellung von Stickstoff-modifizierten CNTs, wobei auf der Oberfläche der NCNTs sich 2 bis 60 Gew.-% Metall-Nanopartikel einer mittleren Partikelgröße im Bereich von 1 bis 10 nm befinden. Nachteilig hierbei ist, dass die Herstellmethode sehr aufwändig ist.

Zur Herstellung von Gasdiffusionselektroden sind verschiedene Methoden bekannt, die grundsätzlich in Nass- und Trockenverfahren unterschieden werden können. Im Trockenverfahren z.B. gemäß der DE102005023615A1, wird der Katalysator mit einem Polymer, häufig PTFE, zu einer Mischung vermahlen und anschließend die Mischung auf einen mechanisches Trägerelement, beispielsweise Silber- oder Nickelnetz, aufgetragen. Durch Pressen z.B. mittels eines Walzenkompaktors wird das Pulver mit dem Träger im Anschluss zu einer Elektrode verdichtet.

Im Nassverfahren, z.B. gemäß der EP2397578A2, wird dagegen eine Suspension von Katalysator und Polymer-Komponente hergestellt. Diese wird auf das Trägermaterial aufgetragen anschließend getrocknet und gesintert (I. Moussallem, J. Jörissen, U. Kunz, S. Pinnow, T. Turek, "Chlor-alkali electrolysis with oxygen depolarized cathodes: history, present status and future prospects", J Appl. Electrochem. 2008, 38, 1177-1194).

Aufgabe war es, eine Kohlenstoff-basierte Gasdiffusionselektrode und ein Verfahren zur Herstellung zur Verfügung zu stellen, mit der die Sauerstoffreduktion sowohl im sauren Elektrolyt (pH < 6) als auch im alkalischem Elektrolyt (pH > 8)erfolgen kann, ohne dass dabei Wasserstoffperoxid entsteht, die Reduktion mit hohen Stromausbeuten erfolgt und die Elektrode eine ausreichende Langzeitstabilität aufweist.

Aus der GB 2 487 836 A ist eine Gasdiffusionselektrode zur Reduktion von Sauerstoff bekannt, wobei die Gasdiffusionselektrode mindestens ein flächiges elektrisch leitfähiges Trägerelement und eine auf dem Trägerelement aufgebrachte Gasdiffusionsschicht und Elektrokatalysator aufweist, wobei die Gasdiffusionsschicht aus einer Mischung aus Kohlenstoffnanoröhrchen und PTFE besteht. Die Herstellung basiert auf einem Nassherstellungsverfahren. Eine Anwendung der Kohlenstoffnanoröhrchen als Elektrokatalysator und die Pulververarbeitung von PTFE und CNT als Elektrokatalysator und in spezifischer Agglomeratform wird hierin nicht beschrieben.

YOU-QUN CHU et al: "Electrocatalytic Reduction of Oxygen on Carbon Nanotubes Electrode", ACTA PHYS. CHIM. SIN., Bd. 20, Nr. 03, 15. März 2004 (2004-03-15), Seiten 331-335, offenbaren ein Verfahren zur Herstellung einer Gasdiffusionselektrode zur Reduktion von Sauerstoff, wobei die Gasdiffusionselektrode mindestens ein flächiges elektrisch leitfähiges Trägerelement und eine auf dem Trägerelement aufgebrachte Gasdiffusionsschicht und einen Elektrokatalysator aufweist, wobei die Gasdiffusionsschicht aus einer Mischung aus Kohlenstoffnanoröhrchen und Fluorpolymer gebildet wird, wobei die Kohlenstoffnanoröhrchen den Elektrokatalysator bilden, und die Kohlenstoffnanoröhrchen frei von Stickstoffbestandteilen sind.

Eine Anwendung der Kohlenstoffnanoröhrchen als Elektrokatalysator und die Pulververarbeitung von PTFE und CNT als Elektrokatalysator und in spezifischer Agglomeratform wird auch hierin nicht beschrieben.

Überraschenderweise wurde gefunden, dass der Einsatz von speziellen Kohlenstoffnanoröhrchen (CNTs), die mit PTFE nach dem vorliegenden erfindungsgemäßen Verfahren vermischt und anschließend die erhaltene Pulvermischung mit einem Trägerelement verpresst werden, zu langzeitstabilen Elektroden führt.

Gegenstand der Erfindung ist ein Verfahren zur Herstellung einer Gasdiffusionselektrode zur Reduktion von Sauerstoff, wobei die Gasdiffusionselektrode mindestens ein flächiges elektrisch leitfähiges Trägerelement und eine auf dem Trägerelement aufgebrachte Gasdiffusionsschicht und einen Elektrokatalysator aufweist, dadurch gekennzeichnet, dass die Gasdiffusionsschicht aus einer Mischung aus Kohlenstoffnanoröhrchen und Fluorpolymer, insbesondere PTFE, gebildet wird, und dass eine Mischung von Kohlenstoffnanoröhrchen und Fluorpolymer in Pulverform auf dem Trägerelement aufgebracht und verdichtet wird, wobei die Kohlenstoffnanoröhrchen den Elektrokatalysator bilden, und im Wesentlichen frei von Stickstoffbestandteilen sind, , sodass der Anteil an Stickstoff in Form von an die Kohlenstoffnanoröhrchen chemisch gebundenem Stickstoff weniger als 0,5 Gew.-% beträgt, und wobei die Kohlenstoffnanoröhrchen in Form eines Agglomerats eingesetzt werden, wobei mindestens 95 Vol.-% der Agglomeratteilchen einen Außendurchmesser, bestimmt mittels Laserbeugung an einer wässrigen Dispersion ohne Einsatz von Ultraschall, im Bereich von 30 µm bis 5000 µm haben..

Im Wesentlichen frei von Stickstoffbestandteilen heißt erfindungsgemäß, dass der Anteil an Stickstoff in Form von an die CNTs chemisch gebundenem Stickstoff weniger als 0,5 Gew.-%, bevorzugt weniger als 0,3 Gew.- %, besonders bevorzugt weniger als 0,2 Gew.-% beträgt. Der Stickstoff-Gehalt kann dabei mittels eines kommerziellen CHN-Analysators, beruhend auf dem Prinzip der Verbrennung der Probe bei 950 °C in reinem Sauerstoff und Detektion des entweichenden Stickstoffs mittels Wärmeleitfähigkeitsdetektor bestimmt werden.

Unter Kohlenstoffnanoröhrchen werden im Sinne der Erfindung und wie im Stand der Technik üblich hauptsächlich zylinderförmige Kohlenstoffröhren verstanden mit einem Durchmesser zwischen 1 und 100 nm und einer Länge, die ein Vielfaches des Durchmessers beträgt. Diese Röhrchen bestehen aus einer oder mehreren Lagen geordneter Kohlenstoffatome und weisen einen in der Morphologie unterschiedlichen Kern auf. Diese Kohlenstoffnanoröhrchen werden beispielsweise auch als "carbon fibrils" oder "hollow carbon fibres" bezeichnet.

In der Fachliteratur sind Kohlenstoffnanoröhrchen seit langem bekannt. Obwohl Iijima (Publikation: S. Iijima, Nature 354, 56-58, 1991) allgemein als Entdecker der Kohlenstoffnanoröhrchen (kurz auch: Nanotubes oder CNT genannt) bezeichnet wird, sind diese Materialien, insbesondere faserförmige Graphitmaterialien mit mehreren Graphenschichten, schon seit den 70er bzw. frühen 80er Jahren bekannt. Tates und Baker (GB 1469930A1, 1977 und EP 0056 004A2, 1982) beschrieben erstmals die Abscheidung von sehr feinem, faserförmigen Kohlenstoff aus der katalytischen Zersetzung von Kohlenwasserstoffen. Allerdings werden die auf Basis kurzkettiger Kohlenwasserstoffe hergestellten Kohlenstofffilamente nicht näher in Bezug auf ihren Durchmesser charakterisiert.

Die Herstellung von Kohlenstoffnanoröhrchen mit Durchmessern kleiner 100 nm ist erstmals in EP 205 556B1 bzw. WO 86/03455A1 beschrieben. Für die Herstellung werden hier leichte (d.h. kurz- und mittelkettige aliphatische oder ein- oder zweikernige aromatische) Kohlenwasserstoffe und ein auf Eisen basierender Katalysator eingesetzt, an dem Kohlenstoffträgerverbindungen bei einer Temperatur oberhalb von 800 - 900 °C zersetzt werden.

Die heute bekannten Methoden zur Herstellung von Kohlenstoffnanoröhrchen umfassen Lichtbogen-, Laserablations- und katalytische Verfahren. Bei vielen dieser Verfahren werden Ruß, amorpher Kohlenstoff und Fasern mit hohen Durchmessern als Nebenprodukte gebildet. Bei den katalytischen Verfahren kann zwischen der Abscheidung an eingetragenen Katalysatorpartikeln und der Abscheidung an in-situ gebildeten Metallzentren mit Durchmessern im Nanometerbereich (sogenannte Flow-Verfahren) unterschieden werden. Bei der Herstellung über die katalytische Abscheidung von Kohlenstoff aus bei Reaktionsbedingungen gasförmigen Kohlenwasserstoffen (im Folgenden CCVD; Catalytic Carbon Vapour Deposition) werden als mögliche Kohlenstoffspender Acetylen, Methan, Ethan, Ethylen, Butan, Buten, Butadien, Benzol und weitere, Kohlenstoff enthaltende Edukte genannt.

Die Katalysatoren beinhalten in der Regel Metalle, Metalloxide oder zersetzbare bzw. reduzierbare Metallkomponenten. Beispielsweise sind im Stand der Technik als für Katalysatoren in Frage kommende Metalle Fe, Mo, Ni, V, Mn, Sn, Co, Cu und weitere genannt. Die einzelnen Metalle haben zwar meist schon alleine eine Tendenz, die Bildung von Kohlenstoffnanoröhrchen zu katalysieren. Allerdings werden laut Stand der Technik hohe Ausbeuten an Kohlenstoffnanoröhrchen und geringe Anteile amorpher Kohlenstoffe vorteilhaft mit Metallkatalysatoren erreicht, die eine Kombination der oben genannten Metalle enthalten.

Besonders vorteilhafte Katalysatorsysteme basieren gemäß dem Stand der Technik auf Kombinationen, die Fe, Co oder Ni enthalten. Die Bildung von Kohlenstoffnanoröhrchen und die Eigenschaften der gebildeten Röhrchen hängen in komplexer Weise von der als Katalysator verwendeten Metallkomponente oder einer Kombination mehrerer Metallkomponenten, dem verwendeten Trägermaterial und der Wechselwirkung zwischen Katalysator und Träger, dem Eduktgas und - partialdruck, einer Beimischung von Wasserstoff oder weiteren Gasen, der Reaktionstemperatur und der Verweilzeit bzw. dem verwendeten Reaktor ab. Eine Optimierung stellt eine besondere Herausforderung für einen technischen Prozess dar.

Anzumerken ist, dass die bei der CCVD verwendete und als Katalysator bezeichnete Metallkomponente im Laufe des Syntheseprozesses verbraucht wird. Dieser Verbrauch ist auf eine Desaktivierung der Metallkomponente zurückzuführen, z.B. aufgrund von Abscheidung von Kohlenstoff auf dem gesamten Partikel, die zur vollständigen Bedeckung des Partikels führt (dem Fachmann ist dies als "Encapping" bekannt). Eine Reaktivierung ist in der Regel nicht möglich bzw. wirtschaftlich nicht sinnvoll. Es werden oftmals nur maximal wenige Gramm Kohlenstoffnanoröhrchen pro Gramm Katalysator erhalten, wobei der Katalysator hier die verwendete Gesamtheit von Träger und aktiven Katalysatormetall(en) umfasst. Aufgrund des geschilderten Verbrauchs an Katalysator und aufgrund des ökonomischen Aufwands einer Abtrennung des Katalysatorrückstands vom fertigen Kohlenstoffnanoröhrchen-Produkt stellt eine hohe Ausbeute an Kohlenstoffnanoröhrchen bezogen auf den eingesetzten Katalysator eine wesentliche Anforderung an Katalysator und Verfahren dar.

Übliche Strukturen von Kohlenstoffnanoröhrchen sind solche vom Zylinder-Typ (tubulare Struktur). Bei den zylindrischen Strukturen unterscheidet man zwischen den einwandigen Kohlenstoffnanoröhrchen (SWCNT; Single Wall Carbon Nano Tubes) und den mehrwandigen Kohlenstoffnanoröhrchen (MWCNT; Multi Wall Carbon Nano Tubes). Gängige Verfahren zu ihrer Herstellung sind z.B. Lichtbogenverfahren (arc discharge), Laser Ablation (laser ablation), chemische Abscheidung aus der Dampfphase (CVD process) und katalytisch chemische Abscheidung aus der Dampfphase (CCVD process).

Nach einem Lichtbogenverfahren können ebenfalls derartige zylindrische Kohlenstoffröhrchen hergestellt werden. Iijima (Nature 354, 1991, 56-8) berichtet über die Bildung von Kohlenstoffröhrchen im Lichtbogenverfahren, die aus zwei oder mehr Graphenlagen bestehen, die zu einem nahtlos geschlossen Zylinder aufgerollt und ineinander geschachtelt sind. Abhängig vom Aufrollvektor sind chirale und achirale Anordnungen der Kohlenstoffatome entlang der Längsachse der Kohlenstofffaser möglich.

Mit dem in der WO 2009/036877A2 beschriebenen Verfahren können z.B. Kohlenstoffnanoröhrchen hergestellt werden, die eine sogenannte Scroll-Struktur aufweisen, bei der ein oder mehrere Graphitschichten bestehend aus zwei oder mehr übereinander geordneten Graphenschichten eine gerollte Struktur bilden.

Weitere bekannte Strukturen von Kohlenstoffnanoröhrchen sind in einem Übersichtsartikel von Milne et al. beschrieben (Milne et al., Encyclopedia of Nanoscience and Nanotechnology, 2003, Volume X, S. 1 - 22; ISBN 1-58883-001-2). Bei diesen Strukturen handelt es sich um die "Herring-bone"-Struktur, die cup-stacked- und die stacked-Struktur, die bamboo-Struktur und die platelet-Struktur. Mittels Elektrospinning von Polyacrylnitril und anschließender Graphitisierung können ebenfalls Kohlenstoffnanofasern erzeugt werden (Jo et al., Macromolecular Research, 2005, Vol. 13, S. 521-528).

Zwar können alle vorgenannten Typen von Kohlenstoffnanoröhrchen grundsätzlich für das neue Herstellungsverfahren in Frage kommen, bevorzugt werden jedoch solche Kohlenstoffnanoröhrchen eingesetzt, die eine zuvor beschriebene Scroll-Struktur aufweisen. Vorteil dieser speziellen CNT-Typen ist ihre Bildung von Agglomeraten in Mikronbereich, die problemloser als Pulver verarbeitet werden können. Die Anwendung solcher CNT-Agglomerate ist bei der Herstellung von Gasdiffusionselektroden nach dem Trockenverfahren daher bevorzugt.

Die aus dem Stand der Technik bekannten Stickstoff enthaltenden Kohlenstoffnanoröhrchen führen bei einer Verarbeitung mit PTFE zu Gasdiffusionselektroden, die im praktischen Betrieb nur wenige Stunden eine brauchbare Zellspannung beim Betrieb als Sauerstoffverzehrelektrode in der Chloralkalielektrolyse zeigten und dann rasch zu einer massiven Spannungserhöhung führten. Solch ein Elektrodenmaterial auf Basis von Stickstoff enthaltenden Kohlenstoffnanoröhrchen ist praktisch unbrauchbar.

Im erfindungsgemäßen Verfahren wird die Mischung aus Kohlenstoffnanoröhrchen und Fluorpolymer als Pulvermischung auf dem Trägerelement aufgebracht.

Als bevorzugtes Material der Kohlenstoffnanoröhrchen werden Kohlenstoffnanoröhrchen in Form eines Agglomerats eingesetzt, wobei mindestens 95 Vol.-% der Agglomeratteilchen einen Außendurchmesser im Bereich von 50 µm bis 3.000 µm und bevorzugt 100 µm bis 1000 µm haben.

Der Außendurchmesser wird beispielsweise mittels Laserbeugung (gemäß ISO 13320:2009) an einer wässrigen Dispersion ohne Einsatz von Ultraschall bestimmt, wozu die gemessene Volumen-Summenverteilungskurve herangezogen wird.

Ein solches Material ist leichter in der Trockenverarbeitung zu handhaben als feinteiligere CNT-Pulver. Es ist auch vorteilhaft, wenn die Agglomerate bei der Herstellung der Pulvermischung erhalten bleiben. In einer bevorzugten Ausführung weist die fertige Elektrode daher auch die CNT Agglomerate in der vorgenannten Durchmesserverteilung auf.

In einer weiteren bevorzugten Ausführung des Verfahrens wird als Fluorpolymer, insbesondere Polytetrafluorethylen (PTFE), ein pulverförmiges Fluorpolymer eingesetzt, das eine mittlere Partikelgröße (d50) in agglomerierter Form von 100 µm bis 1 mm, bevorzugt 150 µm bis 0,8 mm und besonders bevorzugt 200 µm bis 400 µm aufweist.

Die Partikelgröße in agglomerierter Form wird beispielsweise mittels Laserbeugung an einer trockenen Probe dispergiert in Luft oder Inertgas bestimmt. Für die mittlere Partikelgröße wird dann der sogenannte d50-Wert (auch Medianwert) der gemessenen Volumen-Summenverteilungskurve herangezogen.

Die Verarbeitung von Kohlenstoffnanoröhrchen und Fluorpolymer als Pulver erfolgt in bevorzugter Weise durch trockenes Mischen der Pulver.

Als Polymerkomponente wird insbesondere ein hochmolekulares Polytetrafluorethylen (PTFE) eingesetzt, z.B. PTFE Pulver der Fa. Dyneon, Typ 2053 mit einer Partikelgröße d50 von ca. 230 µm. Es können jedoch auch andere PTFE-Pulver eingesetzt werden.

Die neue Gasdiffusionselektrode enthält bevorzugt eine Mischung aus Kohlenstoffnanoröhrchen und Fluorpolymer, insbesondere PTFE, von 1 bis 70 Gew.-%, bevorzugt 5 bis 65 Gew.-%, besonders bevorzugt 10 bis 65 Gew.-% PTFE und 99 - 30 Gew.-%, bevorzugt 95 - 35 Gew.-%, besonders bevorzugt 90 bis 35 Gew.-% Kohlenstoffnanoröhrchen enthält.

Der Mischprozess erfolgt in bevorzugter Weise in zwei Phasen, einer ersten Phase mit geringer Scherung bei niedriger Temperatur und einer zweiten Phase bei höherer Scherung und erhöhter Temperatur. Diese bevorzugte Verfahrensweise ist dadurch gekennzeichnet, dass das Trockenmischen in der ersten Phase zur Erreichung einer homogenen Vormischung durchgeführt wird, wobei die Temperatur des Mischguts maximal 25 °C, bevorzugt maximal 20 °C beträgt.

Die bevorzugte Verfahrensführung erfolgt in der zweiten Phase insbesondere mit Mischern, die über schnell laufende Schlagwerkzeuge verfügen, wie z.B. der Mischer der Fa. Eirich, Typ R02, ausgerüstet mit einem Sternwirbler als Mischelement, der bei einer Drehzahl von 5000 U/min betrieben wird. Im Gegensatz zum Stand der Technik, z.B. in der DE102005023615A, sollte im bevorzugten Verfahren der Mischprozess in der zweiten Phase, nach Erreichen einer homogenen Vormischung aus der ersten Phase, bei einer Temperatur von mehr als 30°C erfolgen. Bevorzugt ist eine Mischtemperatur, die von 30 °C bis 80 °C, besonders bevorzugt 35 °C bis 70 °C, ganz besonders bevorzugt 40 °C bis 60 °C beträgt. Da während des Mischprozesses keine Erwärmung erfolgt, sollte die Pulvermischung vor dem Eintrag in den Mischer erwärmt werden und / oder das Mischgefäß auf die geforderte Temperatur temperiert werden. Bevorzugt werden Mischer eingesetzt, die über einen doppelwandigen Mischbehälter verfügen.

Die erzeugte Pulvermischung wird anschließend, beispielsweise gemäß der Vorgehensweise in DE102005023615A, auf das Trägerelement aufgestreut.

Das Trägerelement der SVE kann ein Netz, Vlies, Schaum, Gewebe, Geflecht oder Streckmetall sein. Der Träger kann bestehen aus Kohlenstofffasern, Nickel, Silber oder mit Edelmetall beschichtetem Nickel, wobei das Edelmetall bevorzugt ausgewählt ist aus einem oder mehreren aus der Reihe: Silber, Gold und Platin.

Das Streuen der Pulvermischung auf das Trägerelement kann z.B. durch ein Sieb geschehen. Besonders vorteilhaft wird auf dem Trägerelement eine rahmenförmige Schablone aufgelegt, wobei die Schablone bevorzugt so gewählt wird, dass sie das Trägerelement gerade umfasst. Alternativ kann die Schablone auch kleiner als die Fläche des Trägerelements gewählt werden. In diesem Fall verbleibt nach dem Aufstreuen der Pulvermischung und dem Verpressen mit dem Trägerelement ein unbeschichteter Rand des Trägerelements frei von elektrochemisch aktiver Beschichtung. Die Dicke der Schablone kann entsprechend der auf das Trägerelement aufzubringenden Menge an Pulvermischung gewählt werden. Die Schablone wird mit der Pulvermischung gefüllt. Überschüssiges Pulver kann mittels eines Abstreifers entfernt werden. Danach wird die Schablone entfernt. Im Gegensatz zu diesem Stand der Technik wird jedoch hierbei eine Schichtdicke von typischerweise mehr als 2 mm erzeugt. So werden Schichtdicken der vorgenannten Pulvermischung gemäß dem neuen Verfahren von bevorzugt 1 bis 10 mm erzeugt, bevorzugt 3 bis 8 mm.

Die Schichten werden zum Beispiel durch eine Schablone erzeugt, überschüssiges Pulver wird durch Abstreifer entfernt.

Anschließend wird die Pulverschicht insbesondere um den Faktor 2 bis 10 verdichtet. Das Verdichtungsverhältnis beschreibt das Verhältnis von Dichte der verdichteten CNT-PTFE Pulvermischung auf dem Trägerelement und der Schüttdichte der Pulvermischung. Das Trägerelement wird bei der Berechnung nicht berücksichtigt.

Die Schüttdichte der Pulvermischung wird z.B. wie folgt ermittelt. In eine Messzylinder von 500ml wird die über ein Sieb mit einer Maschenweite von 1 mm gesiebte Pulvermischung eingefüllt und anschließend gewogen. Aus dem Volumen und der Masse errechnet sich die Schüttdichte. Hierbei wird das Pulver mechanisch nicht belastet, auch wird der Messzylinder nicht fest aufgesetzt oder mechanisch belastet, so dass es zu keiner Kompaktierung bzw. Verdichtung kommen kann.

Die Verdichtung der auf den Trägerelement aufgestreuten und abgerakelten Pulvermischung kann durch Pressen oder durch Walzenkompaktierung erfolgen. Das bevorzugte Verfahren ist die Walzenkompaktierung. Ein besonders bevorzugtes Verfahren zur Herstellung der Gasdiffusionselektrode ist daher dadurch gekennzeichnet, dass das Verdichten mittels Walzen durchgeführt wird, wobei bevorzugt die Linienpresskraft, die von der oder den verwendeten Walzen auf Trägerelement und aufgestreute Pulvermischung wirkt, von 0,1 bis 1 kN/cm, bevorzugt 0,2 bis 0,8 kN/cm beträgt.

Bevorzugt erfolgt das Walzen bei konstanter Umgebungstemperatur der Fertigungsräume, insbesondere bei einer Temperatur von maximal 20 °C.

Die Gasdiffusionselektrode kann einseitig oder beidseitig die Gasdiffusionsschicht aufweisen, die durch das Kompaktieren der CNT / Fluorpolymer - Pulvermischung erzeugt wird. Bevorzugt ist die Gasdiffusionsschicht einseitig auf eine Fläche des Trägerelementes aufgebracht

Die Dicke der Gasdiffusionselektrode beträgt nach dem Verdichten insbesondere 0,1 bis 3 mm, bevorzugt 0,1 bis 2 mm, besonders bevorzugt 0,1 bis 1 mm.

Die Porosität der SVE beträgt 70 bis 90%. Die Porosität wird aus dem Verhältnis der Feststoffvolumen zu Leervolumen in der Gasdiffusionselektrode berechnet. Dabei wird das Feststoffvolumen der Gasdiffusionselektrode aus der Summe des Volumen der zugegebenen Komponenten berechnet. Aus der Dichte der Masse der Gasdiffusionselektrode wird das Volumen der Gasdiffusionselektrode ohne das Trägerelement ermittelt. Vermindert man das Volumen der Gasdiffusionselektrode um das Feststoffvolumen, so wird das Leervolumen der Gasdiffusionselektrode erhalten. Das Verhältnis von Leervolumen zum Volumen der Gasdiffusionselektrode ergibt die Porosität.

Weiterer Gegenstand der Erfindung ist eine Gasdiffusionselektrode zur Reduktion von Sauerstoff, wobei die Gasdiffusionselektrode mindestens einen flächigen elektrisch leitfähigen Trägerelement und eine auf dem Trägerelement aufgebrachte Gasdiffusionsschicht und Elektrokatalysator aufweist, dadurch gekennzeichnet, dass die Gasdiffusionsschicht aus einer Mischung aus Kohlenstoffnanoröhrchen und Fluorpolymer, insbesondere PTFE besteht, wobei die Kohlenstoffnanoröhrchen und das Fluorpolymer in Pulverform auf dem Trägerelement aufgebracht und verdichtet sind und wobei die Kohlenstoffnanoröhrchen den Elektrokatalysator bilden, wobei der Anteil an Stickstoff in Form von an die Kohlenstoffnanoröhrchen chemisch gebundenem Stickstoff weniger als 0,5 Gew.-% beträgt, wobei das Kohlenstoffnanoröhrchenpulver als Agglomerat vorliegt und wobei mindestens 95 Gew.-% der Agglomeratteilchen einen Außendurchmesser, bestimmt mittels Laserbeugung an einer wässrigen Dispersion ohne Einsatz von Ultraschall, im Bereich von 30 µm bis 5000 µm haben.

Bevorzugt ist eine Gasdiffusionselektrode, die aus einem oben beschriebenen erfindungsgemäßen Herstellungsverfahren erhalten ist.

In einer bevorzugten Ausführung der Gasdiffusionselektrode weisen die bei der Fertigung eingesetzten Kohlenstoffnanoröhrchen einen Gehalt an Katalysatorresten des Katalysators, der zur Herstellung der Kohlenstoffnanoröhren verwendet wurde, insbesondere an Übergangsmetallen, besonders bevorzugt an Mangan und/oder Eisen und/oder Kobalt, von kleiner 1 Gew.-%, insbesondere kleiner 0,5 Gew.-%, besonders bevorzugt höchstens 0,3 Gew.-% auf. Dies wird beispielsweise dadurch erreicht, dass die CNT Pulver mit einem höheren Metallgehalt vor der Verarbeitung zur Pulvermischung mit Säuren gewaschen und isoliert werden.

Weiterer Gegenstand der Erfindung ist daher die Verwendung der neuen Gasdiffusionselektrode zur Reduktion von Sauerstoff in Gegenwart von alkalischen Elektrolyten, z.B. von Natronlauge eingesetzt werden, insbesondere in der alkalischen Brennstoffzelle, die Verwendung bei der Trinkwasseraufbereitung, beispielsweise zur Herstellung von Natriumhypochlorit als Bleichlösung oder die Verwendung in der Chlor-Alkalielektrolyse, insbesondere zur Elektrolyse von LiCl, KCl oder NaCl.

Die neue SVE wird besonders bevorzugt bei der Chlor-Alkali-Elektrolyse und hier insbesondere bei der Natriumchlorid-(NaCl)-Elektrolyse eingesetzt.

Ferner ist Gegenstand der Erfindung eine Elektrolysevorrichtung, insbesondere für die Chloralkalielektrolyse, aufweisend eine neue zuvor beschriebene Gasdiffusionselektrode als Sauerstoff verzehrende Kathode.

Die Erfindung wird nachfolgend durch die Beispiele, welche jedoch keine Beschränkung der Erfindung darstellen, näher erläutert.

### Beispiele

### Beispiel 1

Im Folgenden wird die Herstellung einer Elektrode beschrieben.
15 g einer Pulvermischung, bestehend aus 40 Gew.-% PTFE-Pulver Dyneon Typ TF2053Z und 60 Gew.-% CNT-Pulver, (hergestellt entsprechend WO 2009/036877A2, Beispiel 2), mittlerer Agglomerat Durchmesser ca. 450 µm (d50 Wert mittels Laserbeugung), Schüttdichte ca. 200 g/l, Gehalt an Restkatalysator (Co und Mn) ca. 0,64 Gew.-% und einem N-Gehalt von 0,18 Gew.-%, wurden in einer ersten Phase bei einer Temperatur von etwa 19 °C bis zu einer homogenen Mischung vorgemischt und dann auf 50°C im Trockenschrank erwärmt in einem auf 50°C vorgewärmten Mischer der Fa. IKA eingefüllt. Der IKA Mischer war mit einem Sternwirbler als Mischelement ausgerüstet und wurde bei einer Drehzahl von 15000 U/min betrieben. Die Mischzeit betrug in der zweiten Phase des Mischprozesses 60 Sekunden, wobei nach jeweils 15 Sekunden die Mischung unterbrochen wurde, um wandgängiges Mischgut abzulösen. Die Temperatur der Pulvermischung nach der zweiten Mischung betrug 49,6°C. Eine Erwärmung des Pulvers während des Mischprozesses wurde nicht beobachtet. Die Pulvermischung wurde auf Raumtemperatur abgekühlt. Nach dem Abkühlen wurde die Pulvermischung mit einem Sieb mit einer Maschenweite von 1,0 mm gesiebt. Die Pulvermischung hatte eine Schüttdichte von 0,0975 g/cm³.

Die gesiebte Pulvermischung wurde anschließend auf ein Netz aus vergoldeten Nickeldrähten mit einer Drahtdicke von 0,14 mm und einer Maschenweite von 0,5 mm aufgebracht. Das Aufbringen erfolgte mit Hilfe einer 4 mm dicken Schablone, wobei das Pulver mit einem Sieb mit einer Maschenweite von 1 mm aufgebracht wurde. Überschüssiges Pulver, das über die Dicke der Schablone hinausragte, wurde mittels Abstreifer entfernt. Nach Entfernung der Schablone wurde der Trägerelement mit der aufgebrachten Pulvermischung mittels einer Walzenpresse mit einer Presskraft von 0,45 kN/cm verpresst. Der Walzenpresse wurde die Gasdiffusionselektrode entnommen. Die Dichte der Elektrode ohne den Trägerelement betrug 0,5 g/cm³, somit ergibt sich ein Verdichtungsverhältnis von 5,28. Die Dicke der fertigen Elektrode betrug 0,6mm.

Die so hergestellte Sauerstoffverzehrkathode (SVK) wurde in einer Laborelektrolysezelle mit einer aktiven Fläche von 100cm² eingebaut und unter den Bedingungen der Chlor-Alkali-Elektrolyse betrieben. Hierbei wurde eine Ionenaustauschermembran von DuPONT, Typ N982WX eingesetzt. Der Natronlaugespalt zwischen SVK und Membran betrug 3 mm. Als Anode wurde eine Titan-Anode bestehend aus einem Steckmetall mit einem handelsüblichem DSA® Coating zur Chlor-Herstellung der Fa. Denora eingesetzt. Die Zellspannung bei einer Stromdichte von 4 kA/m², einer Elektrolyttemperatur von 90 °C, einer Natriumchlorid-Konzentration von 210g/L und einer Natronlauge-Konzentration von 32 Gew.-% betrug im Mittel 2,20 V. Der Versuch konnte 120 Tage ohne Spannungsanstieg betrieben werden.

### Beispiel 2 Vergleichsbeispiel - Ruß - Trägerelement Silber-Netz

Die Elektrodenherstellung wurde gemäß Beispiel 1 durchgeführt, jedoch wurde statt der CNTs Vulcan Ruß Typ XC72R der Fa. Cabot eingesetzt.

Die Zellspannung betrug zu Beginn des Versuches 2,20V und blieb 7 Tage konstant. Ab dem 7. Tag stieg die Zellspannung täglich um 16mV kontinuierlich an. Am 19. Betriebstag betrug die Zellspannung 2,40 V. Die gebrauchte Elektrode zeigte eine mechanische Verformung durch Quellen der Elektrodenbeschichtung. Das bedeutet, dass dieses Material keine Langzeitstabilität aufweist.

### Beispiel 3 Vergleichsbeispiel - Verwendung von Stickstoff dotierten Kohlenstoffnanoröhrchen

Stickstoff-modifizierte Kohlenstoffnanoröhrchen NCNTs wurden hergestellt mittels eines Katalysators wie in WO2007/093337A2 (Beispiel 1, Katalysator 1) beschrieben, der in einen Wirbelschicht-Reaktor (Durchmesser 100 mm) gefüllt wurde. Zunächst wurden 60 g des Katalysators sowie 200 g NCNTs (aus einem Vorversuch) vorgelegt und in einem Strom aus 27 Liter/Minute Wasserstoff und 3 Liter/Min. Stickstoff bei 750 °C für 30 Minuten reduziert, bevor der Wasserstoff-Strom abgestellt, der Stickstoff-Strom auf 21,5 Liter/Minute erhöht wurde unter gleichzeitigem Beginn der Zudosierung von Pyridin mit einer Dosierrate von 30 g pro Minute für eine Dauer von 30 Minuten, ebenfalls bei 750 °C. Nach dem Abkühlen wurden ca. 400 g NCNTs mit einem Stickstoffanteil von 5,1 Gew.-% erhalten. Es wurden weitere NCNT-Materialien analog hergestellt, und eine Mischung aus mindestens 2 NCNT-Herstellbatches erstellt, die dann für die Elektrodenherstellung eingesetzt wurde.

Diese NCNTs mit einem Stickstoffanteil von 5,1 Gew.-% wurden anstelle der CNTs nach dem oben unter Beispiel 1 beschriebenen Verfahren zu einer Elektrode verarbeitet. Das Potenzial der Halbzelle betrug 387 mV gegen RHE. Das Potential der auf NCNT basierenden Elektrode ist offenkundig deutlich niedriger als das Potential der entsprechenden auf CNT basierenden Elektrode (Beispiel 1).

### Beispiel 4

Für dieses Beispiel wurde ein CNT Material eingesetzt, das in ähnlicher Weise wie das CNT Material von Beispiel 1 gefertigt wurde mit dem Unterschied, dass das für Beispiel 4 verwendete Material besonders gereinigt wurde um Restgehalt an Katalysator aus der Wirbelschichtherstellung zu entfernen. Das gereinigte CNT Material wies einen Restgehalt an CNT Katalysator (Co und Mn) von 0,02 Gew.-% auf. Die eingesetzten CNTs hatten einen N-Gehalt von 0,15 Gew.-%. Im Laborzellentest zeigte die SVK eine mittlere Zellspannung über 16 Tage von 2,18 V und lag damit 20mV unter der Zellspannung mit einer SVE gefertigt aus ungereinigtem CNT Material (Beispiel 1).

## Patentansprüche

1. Verfahren zur Herstellung einer Gasdiffusionselektrode zur Reduktion von Sauerstoff, wobei die Gasdiffusionselektrode mindestens ein flächiges elektrisch leitfähiges Trägerelement und eine auf dem Trägerelement aufgebrachte Gasdiffusionsschicht und einen Elektrokatalysator aufweist, **dadurch gekennzeichnet, dass** die Gasdiffusionsschicht aus einer Mischung aus Kohlenstoffnanoröhrchen und Fluorpolymer, insbesondere PTFE, gebildet wird, und dass eine Mischung von Kohlenstoffnanoröhrchen und Fluorpolymer in Pulverform auf dem Trägerelement aufgebracht und verdichtet wird, wobei die Kohlenstoffnanoröhrchen den Elektrokatalysator bilden, und die Kohlenstoffnanoröhrchen im Wesentlichen frei von Stickstoffbestandteilen sind, sodass der Anteil an Stickstoff in Form von an die Kohlenstoffnanoröhrchen chemisch gebundenem Stickstoff weniger als 0,5 Gew.-% beträgt, und wobei die Kohlenstoffnanoröhrchen in Form eines Agglomerats eingesetzt werden, wobei mindestens 95 Vol.-% der Agglomeratteilchen einen Außendurchmesser, bestimmt mittels Laserbeugung an einer wässrigen Dispersion ohne Einsatz von Ultraschall, im Bereich von 30 µm bis 5000 µm haben.

2. Verfahren nach Anspruch 1, **dadurch gekennzeichnet, dass** die Kohlenstoffnanoröhrchen in Form eines Agglomerats eingesetzt werden, wobei mindestens 95 Vol.-% der Agglomeratteilchen einen Außendurchmesser, bestimmt mittels Laserbeugung an einer wässrigen Dispersion ohne Einsatz von Ultraschall, im Bereich von 50 µm bis 3000 µm, besonders bevorzugt 100 µm bis 1000 µm haben.

3. Verfahren nach einem der Ansprüche 1 bis 2, **dadurch gekennzeichnet, dass** das Fluorpolymer, insbesondere das PTFE, eine mittlere Partikelgröße d50 in agglomerierter Form, bestimmt mittels Laserbeugung an einer trockenen Probe dispergiert in Luft oder Inertgas, von 100 µm bis 1 mm, bevorzugt 150 µm bis 0,8 mm und besonders bevorzugt 200 µm bis 400 µm aufweist.

4. Verfahren nach einem der Ansprüche 1 bis 3, **dadurch gekennzeichnet, dass** die Mischung aus Kohlenstoffnanoröhrchen und Fluorpolymer durch Trockenmischen hergestellt wird.

5. Verfahren nach Anspruch 4, **dadurch gekennzeichnet** das Trockenmischen in einer ersten Phase zur Erreichung einer homogenen Vormischung durchgeführt wird, wobei die Temperatur des Mischguts maximal 25 °C, bevorzugt maximal 20 °C beträgt.

6. Verfahren nach Anspruch 4 oder 5, **dadurch gekennzeichnet** das Trockenmischen in einer zweiten Phase, nach Erreichen einer homogenen Vormischung aus der ersten Phase, unter Verwendung von Mischwerkzeugen durchgeführt wird, wobei die Temperatur der Mischung mehr als 30°C, bevorzugt von 30 °C bis 80 °C, besonders bevorzugt 35 °C bis 70 °C, ganz besonders bevorzugt 40 °C bis 60 °C beträgt.

7. Verfahren nach einem der Ansprüche 1 bis 6, **dadurch gekennzeichnet, dass** das Verdichten mittels Walzen in einer Walzvorrichtung durchgeführt wird und das Walzen bei konstanter Umgebungstemperatur der Fertigungsräume, insbesondere bei einer Temperatur von maximal 20 °C erfolgt.

8. Verfahren nach einem der Ansprüche 1 bis 7, **dadurch gekennzeichnet, dass** die Mischung aus Kohlenstoffnanoröhrchen und Fluorpolymer, insbesondere PTFE, 1 bis 70 Gew.-%, bevorzugt 5 bis 65 Gew.-%, besonders bevorzugt 10 bis 65 Gew.-% PTFE und 99 - 30 Gew.-%, bevorzugt 95 - 35 Gew.-%, besonders bevorzugt 90 bis 35 Gew.-% Kohlenstoffnanoröhrchen enthält.

9. Gasdiffusionselektrode zur Reduktion von Sauerstoff, wobei die Gasdiffusionselektrode mindestens ein flächiges elektrisch leitfähiges Trägerelement und eine auf dem Trägerelement aufgebrachte Gasdiffusionsschicht und Elektrokatalysator aufweist, **dadurch gekennzeichnet, dass** die Gasdiffusionsschicht aus einer Mischung aus Kohlenstoffnanoröhrchen und Fluorpolymer, insbesondere PTFE besteht, wobei die Kohlenstoffnanoröhrchen und das Fluorpolymer in Pulverform auf dem Trägerelement aufgebracht und verdichtet sind und wobei die Kohlenstoffnanoröhrchen den Elektrokatalysator bilden, wobei der Anteil an Stickstoff in Form von an die Kohlenstoffnanoröhrchen chemisch gebundenem Stickstoff weniger als 0,5 Gew.-% beträgt, wobei das Kohlenstoffnanoröhrchenpulver als Agglomerat vorliegt und wobei mindestens 95 Gew.-% der Agglomeratteilchen einen Außendurchmesser, bestimmt mittels Laserbeugung an einer wässrigen Dispersion ohne Einsatz von Ultraschall, im Bereich von 30 µm bis 5000 µm haben.

10. Gasdiffusionselektrode nach Anspruch 9, **dadurch gekennzeichnet, dass** die Elektrode hergestellt ist gemäß einem Verfahren nach einem der Ansprüche 1 bis 8.

11. Gasdiffusionselektrode nach Anspruch 9 oder 10, **dadurch gekennzeichnet, dass** die Mischung aus Kohlenstoffnanoröhrchen und PTFE, 1 bis 70 Gew.-%, bevorzugt 5 bis 65 Gew.-%, besonders bevorzugt 10 bis 65 Gew.-% PTFE und 99 - 30 Gew.-%, bevorzugt 95 - 35 Gew.-%, besonders bevorzugt 90 bis 35 Gew.-% Kohlenstoffnanoröhrchen enthält.

12. Gasdiffusionselektrode nach einem der Ansprüche 9 bis 11, **dadurch gekennzeichnet dass** die Kohlenstoffnanoröhrchen einen Gehalt an Übergangsmetallen des Katalysators, der zur Herstellung der Kohlenstoffnanoröhren eingesetzt wurde, bevorzugt an Mangan und/oder Eisen und/oder Kobalt, von kleiner 1 Gew.-%, insbesondere kleiner 0,5 Gew.-%, besonders bevorzugt höchstens 0,3 Gew.-% aufweisen.

13. Gasdiffusionselektrode nach einem der Ansprüche 9 bis 12, **dadurch gekennzeichnet, dass** der Anteil an Stickstoff in Form von an die Kohlenstoffnanoröhrchen chemisch gebundenem Stickstoff weniger als 0,3 Gew.-%, besonders bevorzugt weniger als 0,2 Gew.-% beträgt.

14. Verwendung der Gasdiffusionselektrode nach einem der Ansprüche 9 bis 13 als Sauerstoffverzehrelektrode zur Reduktion von Sauerstoff im Alkalischen, insbesondere als Sauerstoff verzehrende Kathode in der Elektrolyse, insbesondere in der Chloralkalielektrolyse, oder als Elektrode in der alkalischen Brennstoffzelle oder als Elektrode in einer Metall/Luft-Batterie.

15. Elektrolysevorrichtung, insbesondere für die Chloralkalielektrolyse, aufweisend eine Gasdiffusionselektrode nach einem der Ansprüche 9 bis 13 als Sauerstoff verzehrende Kathode.

## Claims

1. Process for producing a gas diffusion electrode for the reduction of oxygen, where the gas diffusion electrode has at least one sheet-like electrically conductive support element and a gas diffusion layer applied to the support element and an electrocatalyst, **characterized in that** the gas diffusion layer is formed by a mixture of carbon nanotubes and fluoropolymer, in particular PTFE, and **in that** a mixture of carbon nanotubes and fluoropolymer is applied in powder form to the support element and compacted, with the carbon nanotubes forming the electrocatalyst and being substantially free of nitrogen constituents, so that the proportion of nitrogen in the form of nitrogen chemically bound to the carbon nanotubes is less than 0.5% by weight, and with the carbon nanotubes being used in the form of an agglomerate, with at least 95% by volume of the agglomerate particles having an external diameter, determined by means of laser light scattering on an aqueous dispersion without the use of ultrasound, in the range from 30 µm to 5000 µm.

2. Process according to Claim 1, **characterized in that** the carbon nanotubes are used in the form of an agglomerate, where at least 95% by volume of the agglomerate particles have an external diameter, determined by means of laser light scattering on an aqueous dispersion without the use of ultrasound, in the range from 50 µm to 3000 µm, particularly preferably from 100 µm to 1000 µm.

3. Process according to either Claim 1 or 2, **characterized in that** the fluoropolymer, in particular the PTFE, has an average particle size d50 in agglomerated form, determined by means of laser diffraction on a dry sample dispersed in air or inert gas, of from 100 µm to 1 mm, preferably from 150 µm to 0.8 mm and particularly preferably from 200 µm to 400 µm.

4. Process according to any of Claims 1 to 3, **characterized in that** the mixture of carbon nanotubes and fluoropolymer is produced by dry mixing.

5. Process according to Claim 4, **characterized in that** the dry mixing is carried out in a first phase until a homogeneous premix is obtained, with the temperature of the material being mixed being not more than 25°C, preferably not more than 20°C.

6. Process according to Claim 4 or 5, **characterized in that** the dry mixing is carried out in a second phase, after obtaining a homogeneous premix from the first phase, using mixing tools, with the temperature of the mixture being more than 30°C, preferably from 30°C to 80°C, particularly preferably from 35°C to 70°C, very particularly preferably from 40°C to 60°C.

7. Process according to any of Claims 1 to 6, **characterized in that** compaction is carried out by means of rollers in a roller apparatus, and rolling is carried out at a constant ambient temperature of the manufacturing rooms, in particular at a temperature of not more than 20°C.

8. Process according to any of Claims 1 to 7, **characterized in that** the mixture of carbon nanotubes and fluoropolymer, in particular PTFE, contains from 1 to 70% by weight, preferably from 5 to 65% by weight, particularly preferably from 10 to 65% by weight, of PTFE and 99-30% by weight, preferably 95-35% by weight, particularly preferably from 90 to 35% by weight, of carbon nanotubes.

9. Gas diffusion electrode for the reduction of oxygen, where the gas diffusion electrode has at least one sheet-like electrically conductive support element and a gas diffusion layer and electrocatalyst applied to the support element, **characterized in that** the gas diffusion layer consists of a mixture of carbon nanotubes and fluoropolymer, in particular PTFE, with the carbon nanotubes and the fluoropolymer having been applied in powder form to the support element and compacted and the carbon nanotubes forming the electrocatalyst, with the proportion of nitrogen in the form of nitrogen chemically bound to the carbon nanotubes being less than 0.5% by weight, with the carbon nanotube powder being present as an agglomerate with at least 95% by weight of the agglomerate particles having an external diameter, determined by means of laser light scattering on an aqueous dispersion without the use of ultrasound, in the range from 30 µm to 5000 µm.

10. Gas diffusion electrode according to Claim 9, **characterized in that** the electrode has been produced by a process according to any of Claims 1 to 8.

11. Gas diffusion electrode according to Claim 9 or 10, **characterized in that** the mixture of carbon nanotubes and PTFE, contains from 1 to 70% by weight, preferably from 5 to 65% by weight, particularly preferably from 10 to 65% by weight, of PTFE and 99-30% by weight, preferably 95-35% by weight, particularly preferably from 90 to 35% by weight, of carbon nanotubes.

12. Gas diffusion electrode according to any of Claims 9 to 11, **characterized in that** the carbon nanotubes have a content of transition metals of the catalyst used for producing the carbon nanotubes, preferably of manganese and/or iron and/or cobalt, of less than 1% by weight, in particular less than 0.5% by weight, particularly preferably not more than 0.3% by weight.

13. Gas diffusion electrode according to any of Claims 9 to 12, **characterized in that** the proportion of nitrogen in the form of nitrogen chemically bound to the carbon nanotubes is less than 0.3% by weight, particularly preferably less than 0.2% by weight.

14. Use of the gas diffusion electrode according to any of Claims 9 to 13 as oxygen-depolarized electrode for the reduction of oxygen in an alkaline medium, in particular as oxygen-depolarized cathode in electrolysis, in particular in chloralkali electrolysis, or as electrode in an alkaline fuel cell or as electrode in a metal/air battery.

15. Electrolysis apparatus, in particular for chloralkali electrolysis, comprising a gas diffusion electrode according to any of Claims 9 to 13 as oxygen-depolarized cathode.

## Revendications

1. Procédé de fabrication d'une électrode à diffusion de gaz pour la réduction de l'oxygène, l'électrode à diffusion de gaz comprenant au moins un élément support plat électriquement conducteur et une couche de diffusion de gaz appliquée sur l'élément support et un électro-catalyseur, **caractérisé en ce que** la couche de diffusion de gaz est formée par un mélange de nanotubes de carbone et d'un polymère fluoré, notamment le PTFE, et **en ce qu'**un mélange de nanotubes de carbone et d'un polymère fluoré est appliqué sous la forme d'une poudre sur l'élément support et compacté, les nanotubes de carbone formant l'électro-catalyseur, et les nanotubes de carbone étant essentiellement exempts de constituants azotés, de telle sorte que la proportion d'azote sous la forme d'azote relié chimiquement aux nanotubes de carbone soit inférieure à 0,5 % en poids, et les nanotubes de carbone étant utilisés sous la forme d'un agglomérat, au moins 95 % en volume des particules de l'agglomérat ayant un diamètre extérieur, déterminé par diffraction laser sur une dispersion aqueuse sans utiliser d'ultrasons, dans la plage allant de 30 µm à 5 000 µm.

2. Procédé selon la revendication 1, **caractérisé en ce que** les nanotubes de carbone sont utilisés sous la forme d'un agglomérat, au moins 95 % en volume des particules de l'agglomérat ayant un diamètre extérieur, déterminé par diffraction laser sur une dispersion aqueuse sans utiliser d'ultrasons, dans la plage allant de 50 µm à 3 000 µm, de manière particulièrement préférée de 100 µm à 1 000 µm.

3. Procédé selon l'une quelconque des revendications 1 à 2, **caractérisé en ce que** le polymère fluoré, notamment le PTFE, présente une taille de particule moyenne d50 sous forme agglomérée, déterminée par diffraction laser sur un échantillon sec dispersé dans de l'air ou un gaz inerte, de 100 µm à 1 mm, de préférence de 150 µm à 0,8 mm et de manière particulièrement préférée de 200 µm à 400 µm.

4. Procédé selon l'une quelconque des revendications 1 à 3, **caractérisé en ce que** le mélange de nanotubes de carbone et d'un polymère fluoré est fabriqué par mélange à sec.

5. Procédé selon la revendication 4, **caractérisé en ce que** le mélange à sec est réalisé lors d'une première phase pour obtenir un pré-mélange homogène, la température du produit mélangé étant d'au plus 25 °C, de préférence d'au plus 20 °C.

6. Procédé selon la revendication 4 ou 5, **caractérisé en ce que** le mélange à sec est réalisé lors d'une deuxième phase, après l'obtention d'un pré-mélange homogène lors de la première phase, en utilisant des outils de mélange, la température du mélange étant supérieure à 30 °C, de préférence de 30 °C à 80 °C, de manière particulièrement préférée de 35 °C à 70 °C, de manière tout particulièrement préférée de 40 °C à 60 °C.

7. Procédé selon l'une quelconque des revendications 1 à 6, **caractérisé en ce que** le compactage est réalisé par cylindrage dans un dispositif à cylindre, et le cylindrage a lieu à une température ambiante constante des locaux de production, notamment à une température d'au plus 20 °C.

8. Procédé selon l'une quelconque des revendications 1 à 7, **caractérisé en ce que** le mélange de nanotubes de carbone et d'un polymère fluoré, notamment le PTFE, contient 1 à 70 % en poids, de préférence 5 à 65 % en poids, de manière particulièrement préférée 10 à 65 % en poids, de PTFE, et 99 à 30 % en poids, de préférence 95 à 35 % en poids, de manière particulièrement préférée 90 à 35 % en poids, de nanotubes de carbone.

9. Électrode à diffusion de gaz pour la réduction de l'oxygène, l'électrode à diffusion de gaz comprenant au moins un élément support plat électriquement conducteur et une couche de diffusion de gaz appliquée sur l'élément support et un électro-catalyseur, **caractérisée en ce que** la couche de diffusion de gaz est constituée par un mélange de nanotubes de carbone et d'un polymère fluoré, notamment le PTFE, les nanotubes de carbone et le polymère fluoré étant appliqués sous la forme d'une poudre sur l'élément support et compactés, et les nanotubes de carbone formant l'électro-catalyseur, la proportion d'azote sous la forme d'azote relié chimiquement aux nanotubes de carbone étant inférieure à 0,5 % en poids, la poudre de nanotubes de carbone se présentant sous la forme d'un agglomérat, et au moins 95 % en poids des particules de l'agglomérat ayant un diamètre extérieur, déterminé par diffraction laser sur une dispersion aqueuse sans utiliser d'ultrasons, dans la plage allant de 30 µm à 5 000 µm.

10. Électrode à diffusion de gaz selon la revendication 9, **caractérisée en ce que** l'électrode est fabriquée par un procédé selon l'une quelconque des revendications 1 à 8.

11. Électrode à diffusion de gaz selon la revendication 9 ou 10, **caractérisée en ce que** le mélange de nanotubes de carbone et de PTFE contient 1 à 70 % en poids, de préférence 5 à 65 % en poids, de manière particulièrement préférée 10 à 65 % en poids, de PTFE, et 99 à 30 % en poids, de préférence 95 à 35 % en poids, de manière particulièrement préférée 90 à 35 % en poids, de nanotubes de carbone.

12. Électrode à diffusion de gaz selon l'une quelconque des revendications 9 à 11, **caractérisée en ce que** les nanotubes de carbone présentent une teneur en métaux de transition du catalyseur qui a été utilisé pour la fabrication des nanotubes de carbone, de préférence en manganèse et/ou en fer et/ou en cobalt, inférieure à 1 % en poids, notamment inférieure à 0,5 % en poids, de manière particulièrement préférée d'au plus 0,3 % en poids.

13. Électrode à diffusion de gaz selon l'une quelconque des revendications 9 à 12, **caractérisée en ce que** la proportion d'azote sous la forme d'azote relié chimiquement aux nanotubes de carbone est inférieure à 0,3 % en poids, de manière particulièrement préférée inférieure à 0,2 % en poids.

14. Utilisation de l'électrode à diffusion de gaz selon l'une quelconque des revendications 9 à 13 en tant qu'électrode à consommation d'oxygène pour la réduction de l'oxygène en milieu alcalin, notamment en tant que cathode à consommation d'oxygène dans l'électrolyse, notamment dans l'électrolyse chlore-alcali, ou en tant qu'électrode dans une pile à combustible alcaline ou en tant qu'électrode dans une batterie métal/air.

15. Dispositif d'électrolyse, notamment pour l'électrolyse chlore-alcali, comprenant une électrode à diffusion de gaz selon l'une quelconque des revendications 9 à 13 en tant que cathode à consommation d'oxygène.
